# EUROPÄISCHE PATENTSCHRIFT

(11) **EP 3 023 225 B1**
(45) Veröffentlichungstag und Bekanntmachung des Hinweises auf die Patenterteilung: **13.06.2018**
(21) Anmeldenummer: 14194475.1
(22) Anmeldetag: 24.11.2014
(51) Int. Cl.: B29C 65/78, B29C 65/20, B29L 22/00

(54) **Verfahren zur Herstellung von Kunststoffbehältern**
Method for the production of plastic containers
Procédé de fabrication de récipients en matière synthétique

(43) Veröffentlichungstag der Anmeldung: 25.05.2016
(73) Patentinhaber: Magna Steyr Fuel Systems GesmbH, 8261 Sinabelkirchen (AT)
(72) Erfinder: Gross, Jörg, 50389 Wesseling (DE)
(74) Vertreter: Zangger, Bernd

(56) Entgegenhaltungen:
- DE-C1- 3 814 516
- DE-T2- 69 901 868

## Beschreibung

Die Erfindung geht aus von einem Verfahren zur Herstellung von Kunststoff-Behältern aus zwei Halbschalen, wobei die beiden Halbschalen an ihre Rändern stumpf miteinander verschweißt werden.

### Stand der Technik

Hohlkörper aus Kunststoff, wie z. B. Kanister, Tanks und Flaschen können durch Extrusionsblasformen hergestellt sein. Hierbei wird zunächst ein Schlauch aus plastifiziertem Kunststoff extrudiert, der in einem Blaswerkzeug mit einem der Hohlkörperkontur entsprechenden Hohlraum eingeschlossen und bis zur Anlage an der Hohlraumwandung aufgeblasen wird. Nach einer zur Erreichung der Formstabilität genügenden Abkühlungszeit kann der Hohlkörper entformt werden. Nachteilig bei diesem Verfahren ist der erhebliche apparative Aufwand, zu dem die Schliesseinheit, der Speicherkopf, das Blasformwerkzeug, die Wandstärkenregulierung, die Abfallentfernungs- und die Spreizvorrichtung beiträgt. Der je nach Hohlkörpergestalt unterschiedliche Abfallanteil muss wieder in den Prozess zurückgeführt werden. Ein weiterer Nachteil ist die langsamere Abkühlung der Hohlkörperinnenseite, da die Wärmeabfuhr zur Blasluftseite hin gebremst erfolgt.

In der DE1809990 A1 wird ein Verfahren zum Herstellen von Kunststoff- Behältern beschrieben, bei dem man in einer ersten Stufe in einem Schuss wenigstens ein Paar komplementäre Hohlkörperteile durch Spritzgiessen bildet und in einer zweiten Stufe diese Hohlkörperteile zusammenführt und unter Bildung des Hohlkörpers verbindet. Die Hohlkörperteile verbleiben nach dem Öffnen der Spritzgussform in den Aussenformwerkzeugen und mit diesen in eine externe Verbindungsstation transferiert und dort längs ihrer Ränder unlösbar verbunden werden. Durch das Spritzgiessen der Hohlkörperhälften wird eine schnellere Abkühlung als beim Blasformen erreicht, so dass die Taktzeit erheblich gesenkt werden kann. Die Wandstärke wird durch die Kavität exakt vorgegeben, und der Abfallanteil ist sehr gering. Im allgemeinen werden zwei spiegelsymmetrische Hohlkörperhälften geformt, die längs ihrer Ränder zu, dem Hohlkörper verbunden werden. Dabei können die beiden Hälften unterschiedlich ausgebildete Ränder aufweisen, wenn dies für die Verbindung der beiden Hälften förderlich ist. Beispielsweise können an der Rändern Überlappungen oder ein gegenseitiger Eingriff in Form von Nut und Feder ausgebildet sein.

Aus der DE 38 14 516 C1 ist ein Verfahren zur Herstellung eines Spundfasses aus thermoplastischem Kunststoff bekannt, wobei eine Stumpfschweißnaht mit Hilfe eines Zentrierrings mit Saugnäpfen hergestellt wird.

Bekannt ist ferner die Verarbeitung von Kunststoffplatten durch Thermoformen, bei dem üblicherweise thermoplastische Kunststoffe in erwärmtem Zustand umgeformt werden, beispielsweise in Vakuum tiefgezogen werden. Basis bilden dabei Platten, die mit Düsen zur Platten- oder Folienextrusion von Kunststoff und anderen plastifizierbaren und härtbaren Materialien hergestellt sind. Das Material wird üblicherweise zunächst erwärmt und in plastischem Zustand durch die Düse, zwischen einem Düsenunterteil und einem Düsenoberteil, gedrückt, um, nach einer Abkühlungs- und Erhärtungsphase, eine Platte zu erhalten die möglichst genau vorgegebenen Dimensionen entspricht.

Gleichgültig aus welchem Herstellungsverfahren die Teile eines großen Kunststoff-Tanks stammen, müssen die in den unterschiedlichen Verfahren hergestellten Halbschalen in einem nachgeordneten Verfahren miteinander verbunden werden. Beispielsweise wird Heizelementschweißen bei hohlen Behältern eingesetzt, die aus zwei spritzgegossenen Kunststoff Halbschalen bestehen. Aufgrund der unterschiedlichen Toleranz der Halbschalen muss ein Fügewerkzeug bereitgestellt werden, um die beiden Behälter-Halbschalen in eine Zwangsposition zu bringen. Für den Einsatz eines solchen Fügewerkzeugs ist eine zusätzliche Randgeometrie insbesondere ein u- förmiges Profil vorgesehen, entlang dessen die Kanten der Halbschalen verschweißt werden.
In vielen Anwendungsfällen ist es gewünscht, dass die Behälter-Halbschalen ein möglichst großes Volumen begrenzen. Da der Einbauraum im Fahrzeug stets limitiert ist, ist die Verwendung eines umlaufenden Rands für den Einsatz eines Fügewerkzeugs nachteilig, da hier Volumen des Behälters reduziert ist. Der durch den Rand gebildete Raum steht eben nicht für die Aufnahme einer Flüssigkeit zur Verfügung.

Um den Bauraum möglichst gut auszufüllen, werden Behälter-Halbschalen stumpf aufeinander gesetzt und so verschweißt. Das hier bestehende Problem ist, dass die großvolumige in Kunststoff-Halbschalen hohe Toleranzen aufweisen und sich durch die ihnen eigene Elastizität bei der Verarbeitung verbiegen und verwinden.

Es ist daher Aufgabe der Erfindung ein Verfahren zur Herstellung von großvolumige in Kunststoffbehältern vorzustellen, das in der Lage ist, die Ränder der Kunststoff-Halbschalen stumpf passgenau aufeinander zusetzen und so zu verschweißen.

Die Aufgabe wird gelöst mit einem Verfahren zur Herstellung von Kunststoff-Behältern aus zwei Halbschalen, wobei die beiden Halbschalen an ihre Rändern stumpf miteinander verschweißt werden, wobei die Halbschalen einer Ausrichtung der Ränder unterzogen werden und wobei Vakuumgreifer in mindestens zwei Achsrichtungen an den Halbschalen angreifen, wobei die Vakuumgreifer zunächst von innen angreifen und danach von außen weitere Vakuumgreifer die Halbschalen des Kunststoffbehälters fixieren.

Um den Ablauf zu optimieren ist es von Bedeutung, dass die Vakuumgreifer zunächst von innen angreifen und danach von außen weitere Vakuumgreifer den Kunststoffbehälter fixieren. Dadurch wird eine optimale Ausrichtung erreicht. Durch die Verwendung von Vakuumgreifern, wird sowohl eine Transportfunktion der Halbschalen erreicht, als auch die Ausrichtung durch Erzeugung von Zug oder Druck auf die Randbereiche der Halbschalen. Dadurch lassen sich die Ränder auf das Sollmass und die Sollform ausrichten.

Durch den inneren Zugriff der Vakuumgreifer kann die Halbschale auf einem horizontalen Anschlag in einer ersten Raumrichtung ausgerichtet werden. Mit den äußeren Vakuumgreifer lässt sich die Halbschale optimal in einer zweiten Raumrichtung ausrichten. Besonders vorteilhaft ist es, wenn die Vakuumgreifer in Ebenen senkrecht zueinander angreifen.

Alternativ ist es auch möglich, dass die Vakuumgreifer in Ebenen nicht senkrecht zueinander angreifen, was auch mit der auszurichtenden Form der Halbschale zusammenhängt.

Die Vakuumgreifer erfüllen sowohl Transportaufgaben als aus Ausrichtungsaufgaben, was zu einem einfachen Herstellungsverfahren und einer Reduzierung der benötigten Maschinenteile führt.

Die beiden Kunststoff-Behälter Halbschalen werden nur mit Hilfe der horizontalen Vakuumgreifer zueinander ausgerichtet und an den stumpfen Ränder der Halbschalen miteinander verschweißt.

Das erfindungsgemäße Verfahren ermöglicht, dass die beiden Kunststoff-Behälter Halbschalen an den stumpfen Rändern erwärmt und aufeinander zu bewegt und fixiert werden.

### Beschreibung der Erfindung

Die Erfindung wird nachfolgend beispielhaft unter Bezugnahme auf die beigefügte Zeichnung beschrieben.
Fig. 1 zeigt eine schematische Darstellung der beispielhaften Ausführungsform einer Aufnahme
Fig. 2 zeigt den Verfahrensschritt des Verschweißens
Fig. 3 zeigt schematisch den gesamten Herstellungsablauf

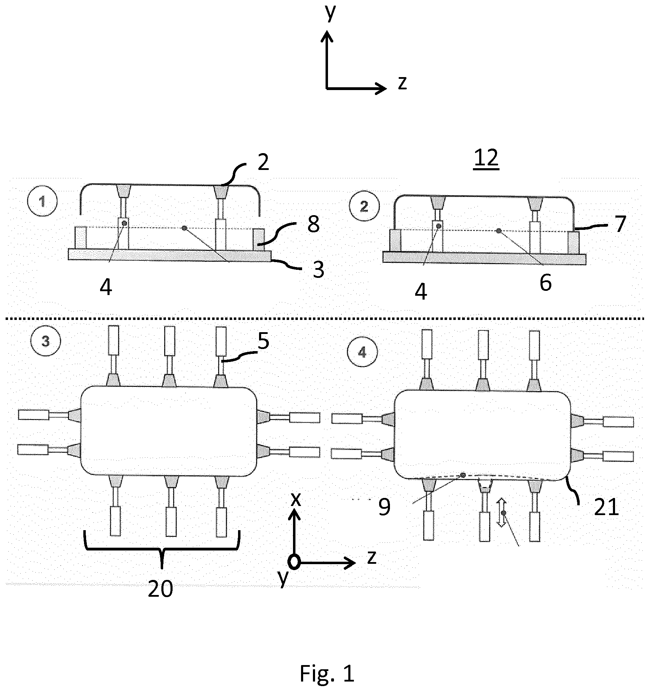

Figur 1 zeigt in der oberen Hälfte einen Schnitt in der y-z- Ebene durch eine Bauteilausrichtung 12.
Eine Halbschale 2 eines Kunststoff-Behälters 1 wird nach einem der bekannten Verfahren hergestellt. Die Halbschale wird nach dem Herstellungsprozess entweder noch im warmen Zustand oder bereits abgekühlt in die Bauteilausrichtung 12 eingebracht. Die Bauteilausrichtung 12 besteht aus einer Bauteilaufnahme 3, die einen umlaufenden, der Soll- Kontur der Halbschale 2 entsprechenden Rand 8 aufweist. Innerhalb der Bauteilaufnahmen 3 befindet sich eine geeignete Anzahl an vertikalen Vakuumgreifern 4, hier im Beispiel sind zwei Vakuumgreifer dargestellt.
Die Halbschalen werden jeweils auf der Bauteilaufnahme mit ihrer offenen Seite, also dem zukünftigen Innenraum, nach unten abgelegt. Die Halbschale wird von den vertikalen Vakuumgreifern 4 aufgenommen und in y-Richtung auf den Rand 8 zu bewegt. Durch die einzeln ansteuerbaren, vertikal verfahrbaren Vakuumgreifer wird der Rand 7 der Halbschalen auf der Bauteilaufnahme 3 am horizontalen Anschlag 6 ausgerichtet. Die Position kann dabei optisch vermessen werden oder mit Anschlagssensoren im Rand bestimmt und somit die Vakuumgreifer gesteuert werden.

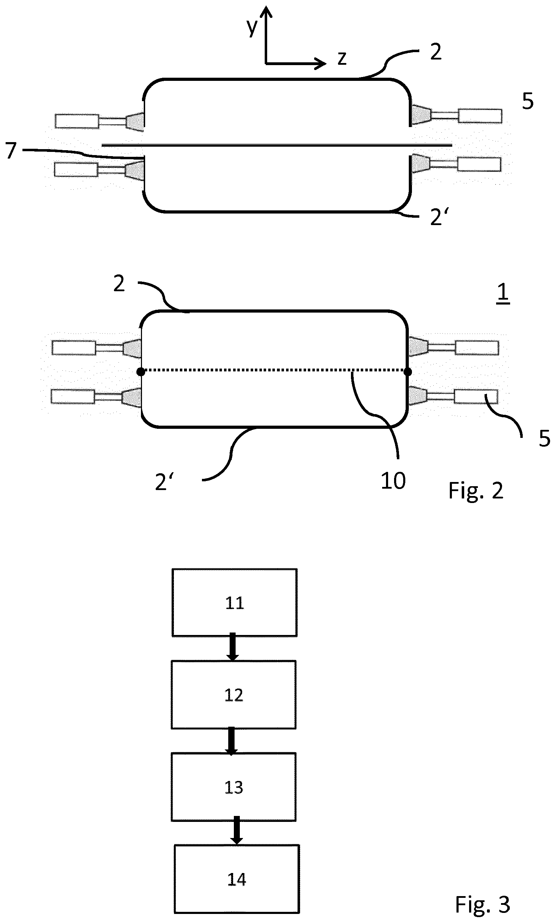

Der Schritt der Ausrichtung am horizontalen Anschlag ist in der Zeichnung in Schritt 1 und Schritt 2 dargestellt. Für den Schritt 3 und 4 wird die Schnittebene in der Figur 1 in die x-z-Ebene verlagert. Noch während die vertikalen Vakuumgreifer 4 das Bauteil, die Halbschale 2 am horizontalen Anschlag fixierten, werden horizontale Vakuumgreifer 5 entlang der Außenfläche der Halbschale an die Halbschale angelegt. In der Darstellung der Figur 2 sind dabei auf den Schmalseiten jeweils zwei Vakuumgreifer, auf den Längsseiten jeweils 3 Vakuumgreifer zu erkennen.
Die einzelnen Vakuumgreifer sind an einem Greifersystem 20 befestigt, und so angeordnet, dass die einzelnen Vakuumgreifer mit Zug und Druck auf die Kontur der Halbschale 2 einwirken können. Damit können durch die einzeln angeordneten und anfahrbaren Vakuumgreifer 5 Wandabschnitte der Halbschale 2 in ihrer Position ausgerichtet werden. In Schritt 4 der Figur 1 ist die Situation am unteren Rand dargestellt: der mittlere Vakuumgreifer übt einen Zug auf die Wandung aus, um die Verformung 9 zu beseitigen.

Die Außenkontur 21 folgt im Ergebnis einer Soll-Kontur, die durch optische Vermessung ermittelt werden kann. Alternativ ist auch die Verwendung eines rahmenartigen Anschlags auf dem Rand 8 der Bauteileaufnahme 3 möglich.

Im ausgeführten Beispiel sind die vertikalen und horizontalen Vakuumgreifer 4,5 senkrecht zueinander angeordnet. Damit ist die Auslegung des Greifsystems und der Bauteilaufnahme sicherlich einfacher, als wenn man die Vakuumgreifer entlang weiterer Raumrichtungen anordnet. Bei komplexeren Formen der Halbschalen kann es aber durchaus möglich sein, dass die beiden Raumrichtungen, in denen die Vakuumgreifer angeordnet sind, nicht senkrecht zueinander verlaufen. Auch ist es denkbar, dass Vakuumgreifer auch noch entlang weiterer Richtungen angeordnet sind, um die Halbschalen optimal auszurichten.

Auch die Anzahl der Vakuumgreifer ist nur beispielhaft dargestellt. Jede notwendige aber verfahrenstechnisch noch sinnvolle Anzahl, symmetrisch oder unsymmetrisch sind denkbar.

Sobald die Ausrichtung der Halbschale beendet ist, werden die vertikalen Vakuumgreifer 4 zurückgezogen und die Halbschale wir nur noch von den horizontalen Vakuumgreifern in die Bauteilverschweißung transportiert. Dabei wird einen halbschale verschwenkt, so dass die Öffnung der zweiten Halbschale zugewandt ist. Die Ränder 7 der Halbschalen 2 und 2' werden übereinander in einem Abstand positioniert.
Die beiden Halbschalen werden über einen automatisierten Prozess so positioniert, dass die Ober- und die Unterschale mit ihren Schweißebenen zueinander ausgerichtet sind, aber noch ein ausreichend großer Abstand zwischen den Halbschalen besteht, um mit einem Schweißspiegel einfahren zu können. Ist der Schweißspiegel positioniert, dann werden beide Behälterhalbschalen von oben und von unten auf den Schweißspiegel gedrückt. Nach entsprechender Aufheizzeit entfernen sich beide Behälterhalbschalen in y-Richtung von dem Schweißspiegel, und der Schweißspiegel wird aus dem Spalt zwischen den Halbschalen in z- Richtung ausgefahren. Im anschließenden Schritt werden die Halbschalen gefügt.

Verfahrenstechnisch ist auch einen Lösung möglich, in der die beiden Halbschalen oberhalb und unterhalb des Schweißspiegels positioniert und erhitzt werden, dann in eine Fügestation in z- Richtung horizontal weitergefahren werden und dort aufeinandergepresst und so verschweißt werden.

Der Schweißprozess kann auch auf alternative Weise mit jeder für den Fachmann geläufigen Methode erfolgen.

Wichtig ist dabei nur, dass die Ränder 7 der Halbschalen stumpf aufeinanderstoßen.

Der gesamte Prozess ist schematisch in Figur 3 aufgezeigt. Die einzelnen Herstellungsstationen sind dabei: Herstellung Halbschale 11, Bauteilausrichtung12 Bauteilverschweißung 13, sowie die finale Entnahme 14.

In den Prozess integriert sind weiterhin Schritte zur Ausstattung der Kunststoffbehälter mit weiteren Komponenten wie Sensoren, Pumpen, Leitungen usw.

### Bezugszeichenliste

1 Kunststoffbehälter
2, 2' Halbschalen
3 Bauteilaufnahme
4 vertikale Vakuumgreifer
5 horizontale Vakuumgreifer
6 Horizontaler Anschlag
7 Rand
8 Auflage
9 Verformung
10 Schweißlinie
11 Herstellung Halbschale
12 Bauteilausrichtung
13 Bauteilverschweißung
14 Entnahme
20 Greifersystem
21 Kontur

## Patentansprüche

1. Verfahren zur Herstellung von Kunststoff-Behältern (1) aus zwei Halbschalen (2,2'), wobei die beiden Halbschalen an ihre Rändern (7) stumpf miteinander verschweißt werden, wobei die Halbschalen (2, 2') einer Ausrichtung der Ränder (7) unterzogen werden, wobei Vakuumgreifer (4, 5) in mindestens zwei Raumrichtungen an den Halbschalen angreifen, **dadurch gekennzeichnet, dass** die Vakuumgreifer (4) zunächst von innen angreifen und danach von außen weitere Vakuumgreifer (5) die Halbschalen (2, 2') des Kunststoffbehälters fixieren.

2. Verfahren zur Herstellung von Kunststoff-Behältern (1) nach Anspruch 1 **dadurch gekennzeichnet, dass** die Vakuumgreifer (4, 5) von innerhalb der Halbschale und/oder von außerhalb der Halbschale angreifen.

3. Verfahren zur Herstellung von Kunststoff-Behältern nach Anspruch 1 oder 2 **dadurch gekennzeichnet, dass** die Vakuumgreifer (4, 5) in Ebenen senkrecht zueinander angreifen.

4. Verfahren zur Herstellung von Kunststoff-Behältern nach Anspruch 1 oder 2 **dadurch gekennzeichnet, dass** die Vakuumgreifer (4, 5) in Ebenen nicht senkrecht zueinander angreifen.

5. Verfahren zur Herstellung von Kunststoff-Behältern nach einem der vorhergehenden Ansprüche, **dadurch gekennzeichnet, dass** die Vakuumgreifer (4, 5) sowohl Transportaufgaben als aus Ausrichtungsaufgaben erfüllen.

6. Verfahren zur Herstellung von Kunststoff-Behältern nach einem der vorhergehenden Ansprüche, **dadurch gekennzeichnet, dass** zwei Kunststoff-Behälter Halbschalen (2, 2') mit Hilfe der horizontalen Vakuumgreifer (5) zueinander ausgerichtet werden und an den stumpfen Ränder (7) der Halbschalen (2, 2') miteinander verschweißt werden.

7. Verfahren zur Herstellung von Kunststoff-Behältern nach einem der vorhergehenden Ansprüche, **dadurch gekennzeichnet, dass** zwei Kunststoff-Behälter Halbschalen (2, 2') an den stumpfen Rändern erwärmt und aufeinander zu bewegt und fixiert werden.

## Claims

1. Method for producing plastics material containers (1) from two half shells (2,2'), wherein the two half shells are butt welded together at their edges (7), wherein the edges (7) of the half shells (2, 2') are subject to an alignment, wherein vacuum grippers (4, 5) cooperate with the half shells in at least two directions in space, **characterized in that** the vacuum grippers (4) first of all engage from the inside and then further vacuum grippers (5) fix the half shells (2, 2') of the plastic container from the outside.

2. Method for producing plastics material containers (1) according to Claim 1, **characterized in that** the vacuum grippers (4, 5) engage from inside the half shell and/or from outside the half shell.

3. Method for producing plastics material containers according to Claim 1 or 2, **characterized in that** the vacuum grippers (4, 5) engage in planes which are perpendicular with respect to one another.

4. Method for producing plastics material containers according to Claim 1 or 2, **characterized in that** that the vacuum grippers (4, 5) engage in planes which are not perpendicular with respect to one another.

5. Method for producing plastics material containers according to one of the preceding claims, **characterized in that** the vacuum grippers (4, 5) fulfil both transporting tasks and aligning tasks.

6. Method for producing plastics material containers according to one of the preceding claims, **characterized in that** two plastics material container half shells (2, 2') are aligned with respect to one another by means of the horizontal vacuum grippers (5) and are welded together at the obtuse edges (7) of the half shells (2, 2').

7. Method for producing plastics material containers according to one of the preceding claims, **characterized in that** two plastics material container half shells (2, 2') are heated at the obtuse edges and are moved toward one another and are fixed.

## Revendications

1. Procédé de fabrication de récipients en matière synthétique (1) constitué de deux demi-coques (2, 2'), les deux demi-coques étant soudées bord à bord au niveau de leurs bords (7) l'une contre l'autre, les demi-coques (2, 2') étant soumises à un alignement des bords (7), des ventouses (4, 5) s'engageant dans au moins deux directions spatiales avec les demi-coques, **caractérisé en ce que** les ventouses (4) s'engagent d'abord depuis l'intérieur puis d'autres ventouses (5) fixent depuis l'extérieur les demi-coques (2, 2') du récipient en matière synthétique.

2. Procédé de fabrication de récipients en matière synthétique (1) selon la revendication 1, **caractérisé en ce que** les ventouses (4, 5) viennent en prise depuis l'intérieur de la demi-coque et/ou depuis l'extérieur de la demi-coque.

3. Procédé de fabrication de récipients en matière synthétique selon la revendication 1 ou 2, **caractérisé en ce que** les ventouses (4, 5) viennent en prise dans des plans perpendiculaires l'un à l'autre.

4. Procédé de fabrication de récipients en matière synthétique selon la revendication 1 ou 2, **caractérisé en ce que** les ventouses (4, 5) viennent en prise dans des plans non perpendiculaires l'un à l'autre.

5. Procédé de fabrication de récipients en matière synthétique selon l'une quelconque des revendications précédentes, **caractérisé en ce que** les ventouses (4, 5) réalisent des fonctions de transport ainsi que d'alignement.

6. Procédé de fabrication de récipients en matière synthétique selon l'une quelconque des revendications précédentes, **caractérisé en ce que** deux demi-coques (2, 2') de récipient en matière synthétique sont alignées l'une avec l'autre à l'aide des ventouses horizontales (5) et sont soudées l'une à l'autre au niveau des bords droits (7) des demi-coques (2, 2').

7. Procédé de fabrication de récipients en matière synthétique selon l'une quelconque des revendications précédentes, **caractérisé en ce que** deux demi-coques (2, 2') de récipient en matière synthétique sont chauffées au niveau des bords droits et sont déplacées l'une vers l'autre et fixées.
